# EUROPÄISCHE PATENTANMELDUNG

(11) **EP 4 764 008 A1**
(43) Veröffentlichungstag der Anmeldung: **24.06.2026**
(21) Anmeldenummer: 24221662.0
(22) Anmeldetag: 19.12.2024
(51) Int. Cl.: C21D 1/34, B21D 22/02, B21D 22/20, B21D 35/00, C21D 1/42, C21D 8/00, C21D 9/00, C21D 9/48, C21D 11/00, F27B 19/00, H05B 6/02, H05B 6/10, H05B 6/36, B32B 15/01, C21D 1/673

(54) **VERFAHREN VORRICHTUNG ZUM ERWÄRMEN VON STAHLBLECHPLATINEN UND STAHLBLECHBAUTEILEN**

(71) Anmelder: voestalpine Metal Forming GmbH, 3500 Krems an der Donau (AT)
(72) Erfinder: Gerstner, Florian, 73430 Aalen (DE); Dorniok, Michael, 73453 Abtsgmünd (DE); Sommer, Andreas, 73453 Abtsgmünd (DE); Heidrich, Jürgen, 09126 Chemnitz (DE)
(74) Vertreter: WSL Patentanwälte Partnerschaft mbB

(57) **Zusammenfassung**

Die Erfindung betrifft ein Verfahren zum Erwärmen von Stahlblechbauteilen zum Zwecke des Formhärtens oder Stahlblechplatinen zum Zwecke des Presshärtens, wobei die Stahlblechplatine oder das Stahlblechbauteil zunächst induktiv teil- oder vollflächig erwärmt wird, wobei ein Flächeninduktor verwendet wird, welcher auf einer Seite der Stahlblechplatine oder des Stahlblechbauteils einwirkt, wobei während der induktiven Erwärmung die Stahlblechplatine oder das Stahlblechbauteil und/oder der Flächeninduktor zur Erzeugung einer Relativbewegung zwischen der Stahlblechplatine oder dem Stahlblechbauteil und dem Flächeninduktor bewegt werden, wobei die induktive Erwärmung mittels einer, mehrerer oder aller der nachfolgenden Maßnahmen gesteuert wird:
a. Relativbewegung zwischen dem Flächeninduktor und dem Stahlblechbauteil oder der Stahlblechplatine um mindestens eine halbe Induktorwindung;
b. Geschwindigkeit der Bewegung des Flächeninduktors;
c. Geschwindigkeit der Bewegung der Stahlblechplatine oder des Stahlblechbauteils;
d. Verfahrweg des Flächeninduktors;
e. Verfahrweg der Stahlblechplatine oder des Stahlblechbauteils;
f. Abstand zwischen dem Flächeninduktor und der Stahlblechplatine oder dem Stahlblechbauteil;
g. Form des Flächeninduktors;
h. Leistung des Flächeninduktors;
i. Frequenz des Flächeninduktors;
j. An- und Ausschalten des Flächeninduktors
und wobei die Stahlblechplatine oder das Stahlblechbauteil anschließend zum Zwecke der Homogenisierung und Resterwärmung in einen Strahlungsofen verbracht wird sowie eine Vorrichtung zur Durchführung des Verfahrens.

## Beschreibung

Die Erfindung betrifft ein Verfahren sowie eine Vorrichtung zum Erwärmen von Stahlblechplatinen und Stahlblechbauteilen.

In der Metallverarbeitung ist es üblich, Stahlblechplatinen und Stahlblechbauteile einer Abschreckhärtung zu unterwerfen. Eine Abschreckhärtung ist hierbei eine Härtung, bei der ein Stahlmaterial zunächst über eine Erwärmung in den austenitischen Zustand, also in das Hochtemperaturgefüge des Eisens, gebracht wird, aus dem es dann mit einer Geschwindigkeit, die über der kritischen Abkühlgeschwindigkeit der jeweiligen Stahllegierung liegt, abgeschreckt wird. Hierbei wandelt das austenitische Gefüge des Stahls in ein martensitisches Gefüge um. Da das austenitische Gefüge erheblich mehr Kohlenstoff lösen kann als das martensitische Gefüge, kommt es bei der Abschreckhärtung zu Kohlenstoffausscheidungen, welche zu einer Verzerrung des Gitters führen und hierdurch zu der sehr hohen Härte eines martensitischen Gefüges. Die Abschreckhärtung wird in der Verarbeitung von Stahlblechen über zwei Verfahren angewendet. Das erste Verfahren ist das sogenannte Presshärten, das zweite Verfahren wurde bei der Anmelderin entwickelt und wird dort als Formhärten bezeichnet.

Beim Presshärten wird eine Stahlblechplatine aus einem Stahlblechband ausgeschnitten oder ausgestanzt, daraufhin der bereits beschriebenen Erwärmung unterzogen, anschließend in ein Umformwerkzeug überführt und in diesem Umformwerkzeug mit einem einzigen Pressenhub zu einem Stahlblechbauteil umgeformt.

Bei diesem Verfahren ist das Umformwerkzeug ein gekühltes Umformwerkzeug, welches der Stahlblechplatine die dreidimensionale Form eines Stahlblechbauteils durch Warmumformung verleiht. Dadurch, dass dieses Umformwerkzeug gekühlt ist, gelingt es, während und insbesondere nach der Umformung, der Stahlblechplatine bzw. dem Stahlblechbauteil Wärme zu entziehen, und zwar mit der bereits beschriebenen Geschwindigkeit, die über der kritischen Abkühlgeschwindigkeit liegt. Somit wird die Stahlblechplatine mit einem einzigen Umformschritt in eine dreidimensionale Form umgeformt und hierbei gleichzeitig gehärtet. Bei diesem Verfahren können aufgrund der Tatsache, dass lediglich ein einziger Umformschritt zur Verfügung steht, üblicherweise nur vergleichsweise gering komplexe Formen erzielt werden.

Beim Formhärten wird der Verfahrensweg insbesondere bezüglich der Umformung geändert. Üblicherweise werden Stahlblechbauteile, beispielsweise für den Automobilbau, in einer Pressenstraße in mehreren Umformschritten zu einem komplexen Bauteil kalt umgeformt, insbesondere tiefgezogen, wobei während der einzelnen Umformschritte auch Nachformoperationen, und Schneidoperationen vorhanden sind, insbesondere um Löcher oder Randbeschneidungen vorzunehmen.

Üblicherweise findet eine solche Kaltumformung in einer Pressenstraße statt, die beispielsweise fünf Umformschritte aufweist. Dies bedeutet, dass eine ebene Stahlblechplatine zunächst in das erste Umformwerkzeug eingeführt wird und nach dem Verlassen des fünften Umformwerkzeuges ihre fertige Form besitzt, auch bezüglich eines Lochbildes und des Randbeschnitts. Ein solches derartig kaltumgeformtes Stahlblechbauteil kann sehr komplexe Formen aufweisen. Als Beispiel sei eine B-Säule eines Kraftfahrzeuges genannt, welche recht komplex ausgebildet ist.

Das Formhärteverfahren sieht vor, dieses fertig umgeformte und fertig beschnittene Stahlblechbauteil zu erwärmen und anschließend in ein gekühltes Formhärtewerkzeug einzulegen, wobei die bauteilseitigen Flächen des Formhärtewerkzeugs, die den Oberflächen des Stahlblechbauteils entsprechen, sich durch Schließen des Formhärtewerkzeuges allseitig an das Stahlblechbauteil anlegen und dem Stahlblechbauteil Wärme entziehen. Der Entzug der Wärme erfolgt hierbei wiederum mit einer über der kritischen Abkühlgeschwindigkeit liegenden Geschwindigkeit.

Beim Formhärten wird hierbei bereits bei der Kaltumformung des Stahlblechbauteils dessen Wärmeausdehnung während des späteren Erwärmens und die anschließende Wärmeschrumpfung während des Transfers vom Ofen zum Werkzeug berücksichtigt, insbesondere indem das Stahlblechbauteil in alle drei Raumrichtungen um 0,2 bis 2 % kleiner hergestellt wird. Nachdem das Stahlblechbauteil durch Erwärmen und Abkühlen seine beabsichtigte Größe erreicht hat, wird es passend in das Formhärtewerkzeug eingelegt und das Formhärtewerkzeug wird zum Abschrecken geschlossen. Das Bestreben des warmen Stahlblechbauteils, während des Abschreckens weiter zu schrumpfen, wird durch die Werkzeugform behindert, wodurch sich weitere vorteilhafte Effekte bezüglich der mechanischen Eigenschaften ergeben.

Das Formhärten ist ein Verfahren, welches insbesondere für Stahlblechplatinen geeignet ist, die entweder gar keine Beschichtung oder eine Beschichtung auf Basis von Zink, insbesondere reine Zink-Beschichtungen, Galfan-Beschichtungen, Galvalume-Beschichtungen oder Galvannealing-Beschichtungen, aufweisen. Aluminium-Silizium-Beschichtungen sind für das Formhärteverfahren nicht geeignet, weil Aluminium-Silizium-Beschichtungen Kaltumformungen schlecht vertragen und hierbei zur Rissbildung und zum Abblättern neigen.

Für Aluminium-Silizium-Beschichtungen ist das zuvor beschriebene Presshärteverfahren geeignet, weil die Aluminium-Silizium-Beschichtung bei den Temperaturen, die nach der Austenitisierung des Stahlsubstrats, insbesondere zwischen 870 und 930 °C, und anschließendem Transfer ins Warmumformwerkzeug vorliegen, gut umformbar ist und gut am Stahlsubstrat haftet.

Es sind unterschiedliche Methoden bekannt, um Stahl auf Austenitisierungstemperatur, d.h. auf eine Temperatur über dem Ac3-Punkt des Stahls, zu erwärmen. Beispielsweise können dafür folgende Erwärmungsarten genutzt werden: Infrarot-Erwärmung, induktive Erwärmung, konduktive Erwärmung oder auch Erwärmung in Öfen mit elektrischen Heizelementen oder Öfen mit gasbefeuerten Mantelstrahlrohren.

Bei der induktiven Erwärmung wird durch eine Spule, üblicherweise als Induktor bezeichnet, mittels eines nieder-, mittel- oder hochfrequenten Wechselstroms ein magnetisches Wechselfeld erzeugt, welches im zu erwärmenden Material Wirbelströme induziert. Durch Wirbelstromverluste innerhalb des Materials wird dieses schließlich erwärmt.

Die Form des Induktors wird in der Regel an das zu erwärmende Werkstück angepasst. Zudem sind unterschiedliche Induktor-Typen zu unterscheiden. So kommen beispielsweise sogenannte Flächeninduktoren, welche das Werkstück einseitig erwärmen, oder auch Querfeldinduktoren, welche das Werkstück von zwei Seiten erwärmen, zum Einsatz.

Aus dem Stand der Technik sind einige Vorteile des induktiven Erwärmens von Stahl bekannt.

Zunächst ist das Erwärmen mittels Induktion sehr schnell, da außerordentlich hohe Heizraten erreicht werden können.

Außerdem zeichnet sich eine Vorrichtung zur induktiven Erwärmung durch vergleichsweise geringe Platzanforderungen aus.

Von hoher Bedeutung ist auch die gute Energieeffizienz der induktiven Erwärmung, da es hier nicht zu Standby-Heizverlusten kommt. Der Induktor wird nur angeschaltet, wenn das zu erwärmende Werkstück vorliegt, darüber hinaus wird hauptsächlich das zu erwärmende Werkstück erwärmt. Ein massiver Ofen mit ausgeprägter Ofenwandisolation und gasbefeuerten Mantelstrahlrohren, der zum Erwärmen von Stahlblechplatinen verwendet wird, kann dagegen beispielsweise nicht ständig an- und ausgeschalten werden, wodurch es zu Standby-Heizverlusten kommt, darüber hinaus muss neben dem zu erwärmenden Werkstück die komplette Ofenmasse inklusive Isolation erwärmt werden zudem müssen Wärmeverluste des Ofens ausgeglichen werden und der Ofen reagiert zudem sehr träge.

Eine Anpassung der Induktorform an das Werkstück, die schnellen Heizraten und die lokale Wirkung des Induktors ermöglichen zudem eine selektive Erwärmung bestimmter Bereiche des Werkstücks.

Nachteile der induktiven Erwärmung zeigen sich beispielsweise bei beschichteten Werkstücken.

Für Aluminium-Silizium-beschichtete Stahlblechplatinen konnte bei der induktiven Erwärmung eine Schichtverschiebung aufgrund des Magnetfelds beobachtet werden. Abhilfe kann in diesem Fall eine anschließende Homogenisierung in einem Rollenherdofen mit gasbefeuerten Mantelstrahlrohren und/oder elektrischen Heizelementen schaffen, wobei sich diese Schichtverschiebungen wieder verteilen.

Auch können die schnellen Heizraten notwendige Schichtreaktionen behindern, welche eine langsame Erwärmung in zumindest bestimmten Temperaturintervallen erfordern.

Besonders nachteilig ist die Inhomogenität der induktiven Erwärmung. Beim induktiven Erwärmen kommt es nämlich häufig zu sogenannten Rand-Mitten-Temperaturdifferenzen und zum Überhitzen der Ränder des jeweiligen Werkstücks (Randeffekt). Mit standardmäßiger induktiver Erwärmung ist es auch kaum möglich, Werkstücke, welche unterschiedliche Dicken aufweisen, mittels induktiver Erwärmung homogen zu erwärmen. Variable Geometrien der Werkstücke führen beim Erwärmen mittels eines Induktors mit Standard-Induktorform ebenfalls zu Inhomogenitäten aufgrund von Strahlungsverlusten.

In der Vergangenheit wurde bereits eine Vielzahl von Anläufen unternommen, induktive Erwärmung für das Erwärmen von Werkstücken aus Stahl zu nutzen.

Aus der DE 10 2016 219 579 A1 ist ein Verfahren zur Wärmebehandlung von auf Basis von Aluminium beschichteten Werkstücken bekannt. Im Rahmen des beanspruchten Verfahrens wird das Werkstück durch gleichzeitigen Wärmeeintrag durch induktive Erwärmung und eine weitere Erwärmung aufgeheizt.

Aus der DE 10 2018 200 843 A1 ist ein Verfahren zum Aufheizen eines beschichteten, metallischen Werkstücks mit unterschiedlichen Dicken bekannt. Im Rahmen des beanspruchten Verfahrens werden der dünnere und der dickere Bereich durch eine gemeinsame Heizeinrichtung erwärmt. Zusätzlich wird der dickere Bereich mit einer weiteren Heizeinrichtung erwärmt. Dabei kann wenigstens eine der Heizeinrichtungen zumindest ein induktives Heizelement aufweisen.

Aus der DE 10 2020 127 057 A1 ist ein Verfahren zum Temperieren von Stahlplatinen bekannt. Im Rahmen des beanspruchten Verfahrens werden mehrere Temperierstationen eingesetzt, um die Stahlplatinen stufenweise mit geringen Temperaturgradienten (Temperaturdelta < 300 °C) zu erwärmen. Die Erwärmung erfolgt dabei durch eine Temperierplatte in Kombination mit Induktion.

Aus der WO 2018/095825 A1 ist ein Verfahren zum Schnellerwärmen von Stahlblechplatinen bekannt. Im Rahmen des beanspruchten Verfahrens wird die Stahlblechplatine flächenmäßig begrenzt durch eine Erwärmungseinrichtung aufgeheizt, wobei die Platine quer zur Einwirkungsrichtung oszilliert oder die Erwärmungseinrichtung in Bezug zur Platine oszilliert. Bei der Erwärmungseinrichtung kann es sich um ein Paar von Querfeldinduktoren handeln.

Aus der WO 2016/012442 A1 ist ein Verfahren zum Erwärmen einer Platine oder eines vorgeformten Stahlblechbauteils bekannt. Im Rahmen des beanspruchten Verfahrens wird die Erwärmung und anschließende Homogenisierung/Resterwärmung in einem 3-Zonen-Ofen durchgeführt, wobei es sich bei der ersten Zone um eine Vorwärmzone handelt, in der die Erwärmung u.a. durch einen Längsfeldinduktor erfolgen kann. Die zweite Zone ist dann die Austenitisierungszone, und in der dritten Zone wird die Platine gehalten und/oder homogenisiert.

Aus dem Stand der Technik geht jedoch kein Verfahren zum Erwärmen von beschichteten Werkstücken aus Stahl hervor, welches alle oben genannten Vorteile unter Ausschluss aller oben genannten Nachteile aufweist.

Aufgabe der Erfindung ist es, ein Verfahren zur Verfügung zu stellen, mit dem insbesondere gepatchte Stahlblechplatinen und gepatchte Stahlblechbauteile sowie Tailor Welded Blanks (TWB) und Stahlblechbauteile aus Tailor Welded Blanks sowie Tailor Rolled Blanks (TRB) und Stahlblechbauteile aus Tailor Rolled Blanks homogen erwärmt werden und eine gute Oberfläche erzielt wird.

Die Aufgabe wird mit einem Verfahren mit den Merkmalen des Anspruchs 1 gelöst.

Vorteilhafte Weiterbildungen sind in Unteransprüchen gekennzeichnet.

Eine weitere Aufgabe der Erfindung ist es, eine Vorrichtung zur Durchführung des erfindungsgemäßen Verfahrens zur Verfügung zu stellen.

Diese Aufgabe wird mit einer Vorrichtung mit den Merkmalen des Anspruchs 14 gelöst.

Vorteilhafte Weiterbildungen sind in Unteransprüchen gekennzeichnet.

Die Erfinder haben erkannt, dass sich die Vorteile des induktiven Erwärmens für das Erwärmen von beschichteten Stahlblechplatinen oder Stahlblechbauteilen optimal nutzen lassen, wenn homogen ausgeführte induktive Vorerwärmung mittels eines Flächeninduktors in Kombination mit einem nachgeschalteten Strahlungsofen (Homogenisierungsofen) angewandt wird (zweistufige Erwärmung). Ein Strahlungsofen im Sinne der Erfindung ist hierbei ein Durchlaufofen, beispielsweise ein Rollenherdofen oder ein Hubschrittförderofen, oder ein Kammerofen, beispielsweise ein Mehrlagenkammerofen, der als Haupterwärmungsart Wärmestrahlung und/oder Konvektion aufweist und beispielsweise mit elektrischen Heizelementen und/oder gasbefeuerten Mantelstrahlrohren ausgestattet ist und eine Ofentemperatur aufweist, die über der Austenitisierungstemperatur Ac3 des Stahlsubstrats liegt.

Ausschlaggebend ist dabei, dass bei der induktiven Vorerwärmung eine Relativbewegung zwischen dem Flächeninduktor und der Stahlblechplatine oder dem Stahlblechbauteil vorgenommen wird, um eine homogene induktive Erwärmung zu erreichen, ohne dass es zu Rand-Mitten-Temperaturdifferenzen oder zum Überhitzen der Ränder kommt.

Auch beugt diese Relativbewegung Inhomogenitäten aufgrund unterschiedlicher Werkstück-Geometrien vor und ermöglicht so die Verwendung einer Standard-Induktorform.

Im nachgeschalteten Strahlungsofen kommt es dann zu einer Resterwärmung auf Zieltemperatur und einer Homogenisierung, d.h. vollständigen Austenitisierung und Durcherwärmung, bei der Temperaturdifferenzen zwischen unterschiedlich dicken Bereichen ausgeglichen und Schichtverschiebungen rückgängig gemacht werden.

So lassen sich zunächst die allgemein bekannten Vorteile des induktiven Erwärmens, nämlich hohe Heizraten, geringe Platzanforderungen und eine gute Energieeffizienz, für das Erwärmen von beschichteten Stahlblechplatinen oder Stahlblechbauteilen nutzen.

Darüber hinaus ergeben sich durch die erfindungsgemäße Kombination von induktiver Vorerwärmung und Resterwärmung und Homogenisierung in einem Strahlungsofen weitere vorteilhafte Effekte:
Durch eine solche induktive Vorerwärmung ist es möglich, den Energiebedarf für die Austenitisierung von Stahlblechplatinen und Stahlblechbauteilen zu reduzieren, da nicht mehr die gesamte Erwärmung in einem weniger energieeffizienten Strahlungsofen erfolgt.

Auch wird die Netto-Ofenverweilzeit durch die induktive Vorerwärmung deutlich verkürzt. Dies ermöglicht die Verwendung von kürzeren Öfen bei gleichen Taktzeiten.

Zudem wird eine Vergleichmäßigung der Erwärmungsdauer der unterschiedlich dicken Bereiche von gepatchten Stahlblechplatinen oder Stahlblechbauteilen, Tailor Welded Blanks oder Tailor Rolled Blanks im Strahlungsofen erreicht, wodurch eine vergrößertes Prozessfenster und größere Blechdickensprünge (≥ 0,5 mm) realisierbar werden.

Mit dem Begriff Bereich wird hier die Fläche der Stahlblechplatine oder des Stahlblechbauteils bezeichnet, welche eine weitgehend homogene Dicke aufweist. Im Sinne der Erfindung ist ein Bereich größerer Dicke jener Bereich mit einem sogenannten "Patch" oder ein Bereich einer TWB mit größerer Dicke oder ein Bereich einer TRB mit größerer Dicke. Ist von der Erwärmung eines dezidierten Bereichs mit größerer Dicke die Rede, muss davon ausgegangen werden, dass auch eine Wärmeeinflusszone um den Bereich mit größerer Dicke herum entsteht.

Die Erfindung betrifft somit insbesondere ein Verfahren zum Erwärmen von Stahlblechbauteilen zum Zwecke des Formhärtens oder Stahlblechplatinen zum Zwecke des Presshärtens, wobei die Stahlblechplatine oder das Stahlblechbauteil zunächst induktiv teil- oder vollflächig erwärmt wird, wobei ein Flächeninduktor verwendet wird, welcher auf einer Seite der Stahlblechplatine oder des Stahlblechbauteils einwirkt, wobei während der induktiven Erwärmung die Stahlblechplatine oder das Stahlblechbauteil und/oder der Flächeninduktor zur Erzeugung einer Relativbewegung zwischen der Stahlblechplatine oder dem Stahlblechbauteil und dem Flächeninduktor bewegt werden, wobei die induktive Erwärmung mittels einer, mehrerer oder aller der nachfolgenden Maßnahmen gesteuert wird:
a. Relativbewegung zwischen dem Flächeninduktor und dem Stahlblechbauteil oder der Stahlblechplatine um mindestens eine halbe Induktorwindung;
b. Geschwindigkeit der Bewegung des Flächeninduktors;
c. Geschwindigkeit der Bewegung der Stahlblechplatine oder des Stahlblechbauteils;
d. Verfahrweg des Flächeninduktors;
e. Verfahrweg der Stahlblechplatine oder des Stahlblechbauteils;
f. Abstand zwischen dem Flächeninduktor und der Stahlblechplatine oder dem Stahlblechbauteil;
g. Form des Flächeninduktors;
h. Leistung des Flächeninduktors;
i. Frequenz des Flächeninduktors;
j. An- und Ausschalten des Flächeninduktors
und wobei die Stahlblechplatine oder das Stahlblechbauteil anschließend zum Zwecke der Homogenisierung und Resterwärmung in einen Strahlungsofen verbracht wird.

Eine Weiterbildung sieht vor, dass die Stahlblechplatinen oder Stahlblechbauteile eine Beschichtung auf Basis von Zink oder Basis von Aluminium aufweisen.

Vorteilhafterweise kann diese Schicht eine Dicke von 5 µm bis 20 µm je Seite aufweisen. Dies kann einen guten Korrosionsschutz gewährleisten. Insbesondere kann die Beschichtung ein Z80 oder Z120 oder Z140 oder Z180 nach DIN EN 10346 sein.

Beschichtungen auf Basis von Zink können einen vergleichsweise hohen Zinkanteil von 85 Gew.-% bis 99 Gew.-% aufweisen und enthalten neben unvermeidbaren Verunreinigungen noch Aluminium im Bereich von 0,2 bis 2 Gew.-%. Des Weiteren können weitere sauerstoffaffine Elemente wie Magnesium enthalten sein.

Beschichtungen auf Basis von Aluminium können einen vergleichsweise hohen Aluminiumanteil von 80 Gew.-% bis 99 Gew.-% aufweisen und enthalten neben unvermeidbaren Verunreinigungen noch Silizium im Bereich von 1 bis 15 Gew.-%. Des Weiteren können weitere Elemente wie Magnesium, Eisen oder andere Elemente enthalten sein.

Eine Weiterbildung sieht vor, dass die Stahlblechplatinen oder Stahlblechbauteile Bereiche unterschiedlicher Dicke aufweisen.

Eine Weiterbildung sieht vor, dass die Stahlblechplatinen oder Stahlblechbauteile gepatchte Stahlblechplatinen oder Stahlblechbauteile oder Tailor Welded Blanks oder Tailor Rolled Blanks sind.

Eine Weiterbildung sieht vor, dass die Stahlblechplatine oder das Stahlblechbauteil während der induktiven Erwärmung auf einer Transferschiene ruht, wobei diese so ausgebildet ist, dass die Stahlblechplatine oder das Stahlblechbauteil gespannt wird.

Eine Weiterbildung sieht vor, dass die Stahlblechplatine oder das Stahlblechbauteil während der induktiven Erwärmung auf einem Robotergreifer angeordnet ist, wobei dieser so ausgebildet ist, dass die Stahlblechplatine oder das Stahlblechbauteil gespannt wird.

Eine Weiterbildung sieht vor, dass bei der induktiven Erwärmung der gesamte Bereich oder nur bestimmte Bereiche der Stahlblechplatinen oder Stahlblechbauteile auf 400 bis 800 °C, insbesondere 500 bis 750 °C, erwärmt werden.

Eine Weiterbildung sieht vor, dass die induktive Erwärmung nur in Bereichen größerer Dicke der Stahlblechplatine oder des Stahlblechbauteils, das heißt im Bereich des zumindest einen Patches oder des zumindest einen dickeren Bereichs eines Tailor Welded Blank oder des zumindest einen dickeren Bereichs eines Tailor Rolled Blank durchgeführt wird.

Eine Weiterbildung sieht vor, dass der Abstand zwischen dem Flächeninduktor und der Stahlblechplatine oder dem Stahlblechbauteil entlang des Verfahrwegs des Flächeninduktors und/oder des Verfahrwegs der Stahlblechplatine oder des Stahlblechbauteils mindestens einmal verändert wird. Damit kann vorteilhafterweise die Erwärmung variiert werden und beispielsweise bei einer Verringerung des Abstands die Erwärmungsrate erhöht werden bzw. bei einer Erhöhung des Abstands verringert werden.

In einer bevorzugten Ausführungsform kann daher der Flächeninduktor eine Relativbewegung gegenüber dem Stahlblechbauteil bzw. der Stahlblechplatine in allen drei Dimensionen vornehmen. Damit kann vorteilhafterweise eine möglichst homogene Temperaturverteilung in dem Stahlblechbauteil bzw. der Stahlblechplatine gewährleistet werden.

Eine Weiterbildung sieht vor, dass die induktive Erwärmung der Stahlblechplatinen oder Stahlblechbauteile innerhalb von < 20 s, insbesondere < 10 s durchgeführt wird.

Eine Weiterbildung sieht vor, dass ein Transfer der induktiv vorerwärmten Stahlblechplatinen oder Stahlblechbauteile in den Strahlungsofen innerhalb von maximal 10 s, insbesondere maximal 5 s durchgeführt wird.

Eine Weiterbildung sieht vor, dass durch die induktive Erwärmung mindestens 80 % Flächenanteil des induktiv erwärmten Bereichs auf eine Temperatur, gemessen von der Seite des Flächeninduktors, mit einem maximalen Temperaturdelta von ± 50 K gebracht wird.

Eine Weiterbildung sieht vor, dass die Erwärmung der Bereiche größerer Dicke so erfolgt, dass nach der induktiven Erwärmung die gesamte Stahlblechplatine oder das gesamte Stahlblechbauteil im Strahlungsofen auf eine einheitliche Temperatur mit einem maximalen Temperaturdelta von ±25 K gebracht wird.

Eine Weiterbildung sieht vor, dass im Strahlungsofen die Resterwärmung der induktiv vorerwärmten Stahlblechplatinen oder Stahlblechbauteile auf Ac3, insbesondere > 850 °C, insbesondere > 870 °C erfolgt und diese Temperatur zur vollständigen Austenitisierung und Durcherwärmung, mindestens > 15 s, insbesondere > 30s, insbesondere 45 s gehalten wird.

Die Erfindung betrifft ferner eine Vorrichtung zum Erwärmen von Stahlblechbauteilen zum Zwecke des Formhärtens oder Stahlblechplatinen zum Zwecke des Presshärtens, insbesondere eine Vorrichtung zur Durchführung des erfindungsgemäßen Verfahrens, dadurch gekennzeichnet, dass die Vorrichtung einen Robotergreifer und/oder eine Transferschiene, einen einseitigen Flächeninduktor und einen Strahlungsofen umfasst, wobei der Robotergreifer, der Flächeninduktor und die Transferschiene entlang eines vorgegebenen Verfahrwegs mit einer vorgegebenen Geschwindigkeit bewegbar sind, sodass während einer induktiven Erwärmung eine Relativbewegung um mindestens eine halbe Induktorwindung zwischen der Stahlblechplatine oder dem Stahlblechbauteil und dem Flächeninduktor ausführbar ist.

Eine Weiterbildung sieht vor, dass die Transferschiene so ausgebildet ist, dass die Stahlblechplatine oder das Stahlblechbauteil während der induktiven Erwärmung gespannt werden kann.

Eine Weiterbildung sieht vor, dass der Robotergreifer so ausgebildet ist, dass die Stahlblechplatine oder das Stahlblechbauteil während der induktiven Erwärmung gespannt werden kann.

Die Erfindung wird anhand einer Zeichnung beispielhaft erläutert. Es zeigen dabei:
- Fig. 1:: Stark schematisiert eine Anlage zur Durchführung des Verfahrens umfassend Führung des Flächeninduktors über eine Transferschiene;
- Fig. 2:: stark schematisiert eine Anlage zur Durchführung des Verfahrens umfassend Führung des Flächeninduktors über einen Robotergreifer;
- Fig. 3:: Komponenten zur Durchführung des Verfahrens: Robotergreifer, Transferschiene und Strahlungsofen;
- Fig. 4:: erfindungsgemäße Relativbewegung zwischen dem Flächeninduktor und der Stahlblechplatine oder dem Stahlblechbauteil;
- Fig. 5:: unterschiedliche Induktorformen (abgerundet und eckig);
- Fig. 6:: Draufsicht des optimierten Verfahrwegs mit sieben Anfahrpunkten mit unterschiedlichen Abständen zur Platine (Ecken in der Praxis verrundet);
- Fig. 7:: Seitenansicht des optimierten Verfahrwegs mit sieben Anfahrpunkten mit unterschiedlichen Abständen zur Platine (Ecken in der Praxis verrundet);
- Fig. 8:: Wärmeverteilung einer gepatchten Stahlblechplatine nach der induktiven Vorerwärmung auf ca. 700 °C;
- Fig. 9:: Wärmeverteilung einer gepatchten Stahlblechplatine nach der Resterwärmung und Homogenisierung im Strahlungsofen auf 870 °C (45 s bei 870 °C gehalten);
- Fig. 10:: kein Ausblühen und keine Silbrigkeit einer ZF80-beschichteten, gepatchten Stahlblechplatine nach induktiver Erwärmung auf 700°C in 8 s (Heizrate >> 84 K/s);
- Fig. 11:: kein Ausblühen und keine Silbrigkeit einer Z80-beschichteten, gepatchten Stahlblechplatine nach induktiver Erwärmung auf 700°C in 8 s (Heizrate >> 84 K/s);
- Fig. 12:: Heilung der Schichtverschiebung einer Aluminium-Silizium-beschichteten, gepatchten Stahlblechplatine nach induktiver Erwärmung durch Homogenisierung im Strahlungsofen;
- Fig. 13:: Übersicht über die Zeitersparnis bezüglich der Ofenverweilzeit für Stahlblechplatinen mit unterschiedlichen Beschichtungen.

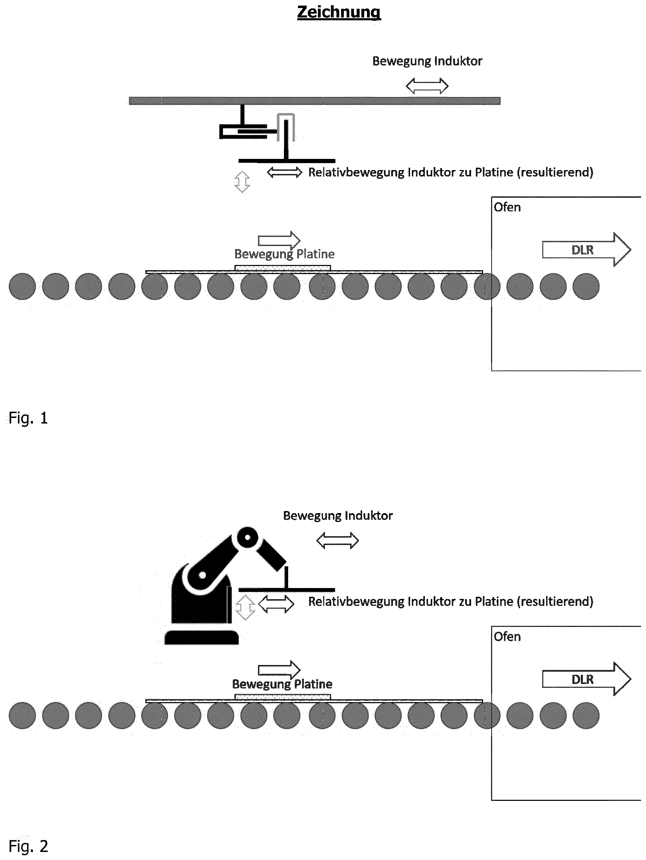

Die Figuren 1 und 2 zeigen stark schematisiert eine beispielhafte Anlage zur Durchführung des Verfahrens, wobei der Flächeninduktor entweder über eine Transferschiene geführt wird (Figur 1) oder durch einen Robotergreifer (Figur 2). Die gepatchte Stahlblechplatine wird in diesem Beispiel über ein Rollen umfassendes Fördersystem von der induktiven Vorerwärmung zum Strahlungsofen transferiert. Alternative Fördersysteme wie beispielsweise Transferschienen oder ähnliches wären genauso denkbar.

Erfindungsgemäß werden Stahlblechplatinen und Stahlblechbauteile, insbesondere auf Basis von Aluminium oder Zink beschichteten Stahlblechplatinen und Stahlblechbauteile, insbesondere unterschiedlich dicke Bereiche aufweisende Stahlblechplatinen und Stahlblechbauteile, insbesondere gepatchte Stahlblechplatinen und Stahlblechbauteile, Tailor Welded Blanks oder Tailor Rolled Blanks, durch zweistufige Erwärmung, umfassend eine induktive Vorerwärmung, einen Transfer und eine Erwärmung in einem Strahlungsofen, auf Austenitisierungstemperatur erwärmt.

In der ersten Stufe wird die Stahlblechplatine oder das Stahlblechbauteil zunächst innerhalb von 8 s induktiv teil- oder vollflächig mittels eines einseitigen Flächeninduktors auf 500 bis 800 °C, insbesondere 700 °C, erwärmt, wobei während der induktiven Erwärmung sowohl die Stahlblechplatine oder das Stahlblechbauteil als auch der Flächeninduktor zueinander bewegt werden, sodass eine Relativbewegung um mindestens eine halbe Induktorwindung entsteht.

Zudem wird die induktive Erwärmung mittels einer, mehrerer oder aller der nachfolgenden Maßnahmen gesteuert: Geschwindigkeit der Bewegung des Flächeninduktors, Geschwindigkeit der Bewegung der Stahlblechplatine oder des Stahlblechbauteils, Verfahrweg des Flächeninduktors, Verfahrweg der Stahlblechplatine oder des Stahlblechbauteils, Abstand zwischen dem Flächeninduktor und der Stahlblechplatine oder dem Stahlblechbauteil, Form des Flächeninduktors, Leistung des Flächeninduktors, Frequenz des Flächeninduktors, An- und Ausschalten des Flächeninduktors.

Obige Maßnahmen ermöglichen eine homogene induktive Erwärmung der Stahlblechplatinen oder Stahlblechbauteile, ohne dass es zu Rand-Mitten-Temperaturdifferenzen oder zum Überhitzen der Ränder kommt.

Die oben vorgestellten Maßnahmen - Relativbewegung zwischen der Stahlblechplatine oder dem Stahlblechbauteils und dem einseitigen Flächeninduktor um mindestens eine halbe Induktorwindung (sowohl Stahlblechplatine oder Stahlblechbauteil als auch Flächeninduktor in Bewegung), Geschwindigkeit der Bewegung des Flächeninduktors, Geschwindigkeit der Bewegung der Stahlblechplatine oder des Stahlblechbauteils, Verfahrweg des Flächeninduktors, Verfahrweg der Stahlblechplatine oder des Stahlblechbauteils, Abstand zwischen dem Flächeninduktor und der Stahlblechplatine oder dem Stahlblechbauteil, Form des Flächeninduktors, Leistung des Flächeninduktors, Frequenz des Flächeninduktors, An- und Ausschalten des Flächeninduktors - zur Realisierung einer homogenen, gegebenenfalls selektiven induktiven Vorerwärmung können erfindungsgemäß einzeln ausgeführt oder auch miteinander kombiniert werden.

Nach der induktiven Vorerwärmung wird die Stahlblechplatine oder das Stahlblechbauteil zum Zwecke der Homogenisierung und Resterwärmung in einen Strahlungsofen verbracht, beispielsweise über ein Rollen umfassendes Fördersystem, wobei dieser Transfer innerhalb von maximal 5 s erfolgt, sodass während des Transfers auftretende Temperaturverluste minimiert werden. Letztere können auch durch zusätzliche Maßnahmen wie beispielsweise Einhausung oder Verwendung von Reflektionsblechen vermindert werden.

Im Strahlungsofen wird die gesamte Stahlblechplatine oder das gesamte Stahlblechbauteil schließlich auf eine einheitliche Temperatur gebracht (Homogenisierung), wobei das maximale Temperaturdelta ±25 °C beträgt.

Zudem erfolgt im Strahlungsofen eine Resterwärmung der induktiv vorerwärmten Stahlblechplatinen oder Stahlblechbauteile auf Ac3, insbesondere > 850 °C, insbesondere > 870 °C. Diese Temperatur wird dann zur vollständigen Austenitisierung und Durcherwärmung mindestens > 15 s, insbesondere > 30 s, insbesondere 45 s, gehalten.

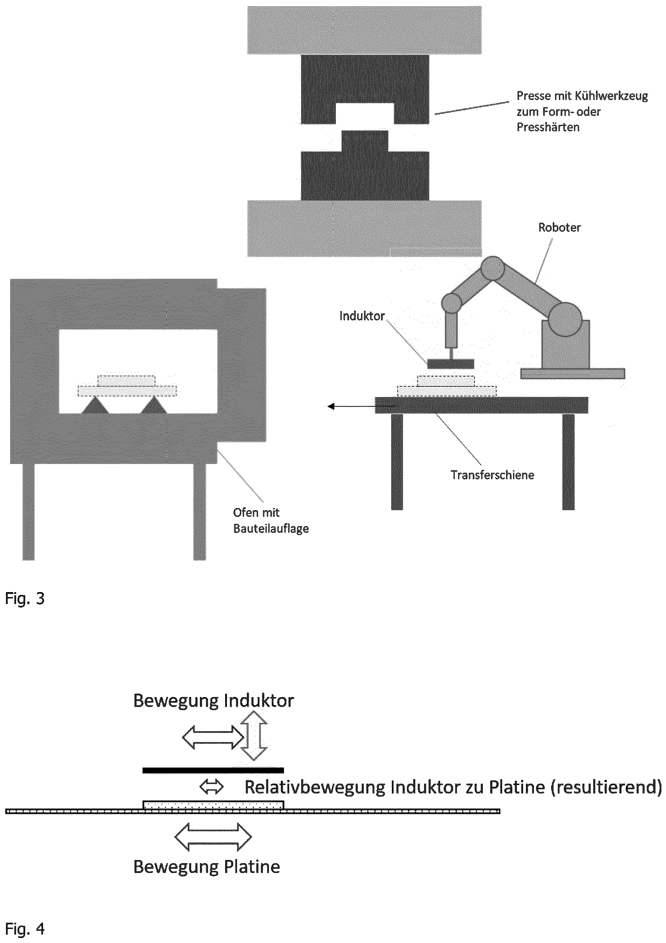

In Figur 3 sind einige Komponenten der erfindungsgemäßen Vorrichtung zur Durchführung des Verfahrens zu sehen: der Robotergreifer, welcher die Stahlblechplatine oder das Stahlblechbauteil auf die Transferschiene verbringt und auf welchem die Stahlblechplatine oder das Stahlblechbauteil ggf. während des induktiven Vorerwärmens angeordnet ist, die Transferschiene, auf welcher die Stahlblechplatine oder das Stahlblechbauteil in den Strahlungsofen verbracht wird und auf welcher die Stahlblechplatine oder das Stahlblechbauteil ggf. während des induktiven Vorerwärmens ruht, und der Strahlungsofen, in welchem die Stahlblechplatine oder das Stahlblechbauteil homogenisiert und auf Ac3 resterwärmt wird.

Der Robotergreifer, der Flächeninduktor und die Transferschiene sind entlang eines vorgegebenen Verfahrwegs mit einer vorgegebenen Geschwindigkeit bewegbar, sodass während der induktiven Vorerwärmung eine Relativbewegung um mindestens eine halbe Induktorwindung zwischen der Stahlblechplatine oder dem Stahlblechbauteil und dem Flächeninduktor ausführbar ist (Figur 4).

In einer vorteilhaften Ausführungsform, in der die Stahlblechplatine oder das Stahlblechbauteil während der induktiven Vorerwärmung auf einer Transferschiene ruht, ist diese Transferschiene so ausgebildet, dass die Stahlblechplatine oder das Stahlblechbauteil gespannt wird und Durchbiegung minimiert wird.

In einer anderen vorteilhaften Ausführungsform, in der die Stahlblechplatine oder das Stahlblechbauteil während der induktiven Vorerwärmung auf einem Robotergreifer angeordnet ist, ist dieser Robotergreifer so ausgebildet, dass die Stahlblechplatine oder das Stahlblechbauteil gespannt wird und Durchbiegung minimiert wird.

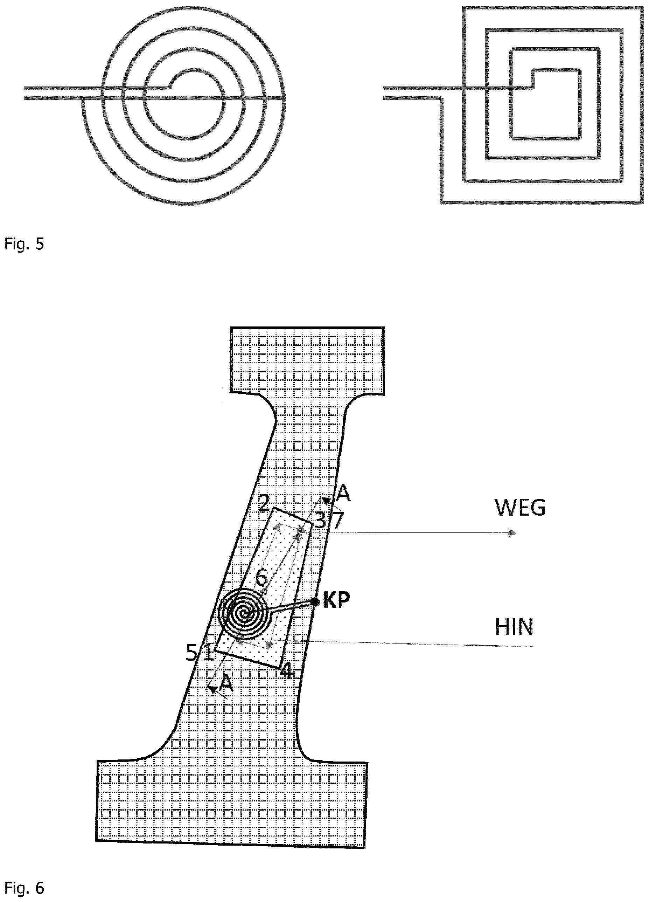

Der für die induktive Vorerwärmung verwendete einseitige Flächeninduktor kann unterschiedliche Formen aufweisen. Dabei orientiert sich die Form üblicherweise an dem zu erwärmenden Werkstück. Zwei beispielhafte Induktorformen, abgerundet und eckig, sind in Figur 5 gezeigt.

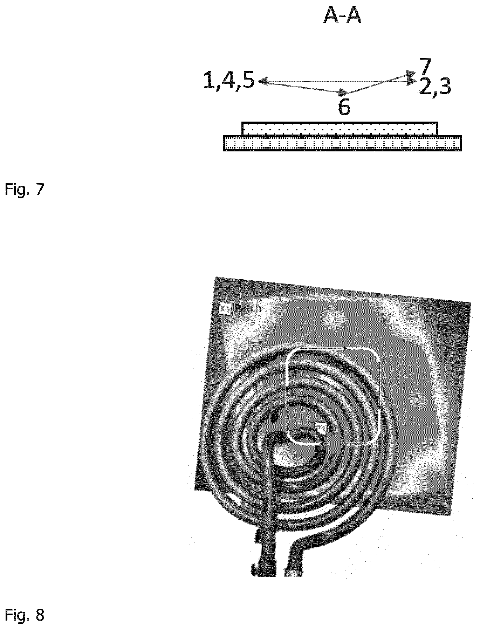

Im Zuge der erfindungsgemäßen Relativbewegung folgt der Flächeninduktor einem für dieses spezielle Beispiel optimierten Verfahrweg mit sieben Anfahrpunkten mit unterschiedlichen Abständen zur Platine. Die Figuren 6 und 7 zeigen diesen Verfahrweg in der Draufsicht und in der Seitenansicht, wobei die "Ecken" des abgebildeten Verfahrwegs in diesem Beispiel verrundet sind.

Eine geeignete Induktorform in Kombination mit einer kontrolliert ausgeführten Relativbewegung ermöglicht das homogene Erwärmen von Stahlblechplatinen und Stahlblechbauteilen mit unterschiedlichen Geometrien und Dicken, insbesondere von gepatchten Stahlblechplatinen und Stahlblechbauteilen, Tailor Welded Blanks und Tailor Rolled Blanks.

Im Sinne der Erfindung werden bei der induktiven Vorerwärmung der gesamte Bereich oder nur bestimmte Bereiche der Stahlblechplatinen oder Stahlblechbauteile erwärmt. Handelt es sich um gepatchte Stahlblechplatinen oder Stahlblechbauteile, Tailor Welded Blanks oderTailor Rolled Blanks wird die induktive Erwärmung nur im Bereich größerer Dicken durchgeführt.

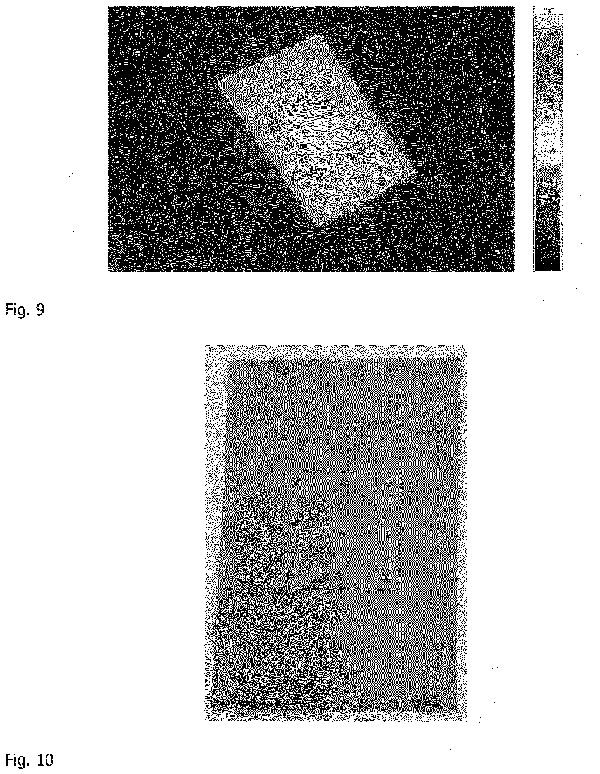

In der Figur 8 ist die Temperaturverteilung einer gepatchten Stahlblechplatine nach dem induktiven Vorerwärmen dargestellt. Die Figur 9 zeigt die Temperaturverteilung nach der Vorerwärmung mittels Induktion und anschließender Homogenisierung im Strahlungsofen.

Erfindungsgemäß soll durch die induktive Vorerwärmung mindestens 80 % Flächenanteil des induktiv erwärmten Bereichs auf eine Temperatur, gemessen von der Seite des Flächeninduktors, mit einem maximalen Temperaturdelta von ± 50 K gebracht werden. In Figur 8 ist zu sehen, dass der Patch selektiv erwärmt wird und sich eine relativ homogene Wärmeverteilung des Patches, welcher größtenteils eine Temperatur um ca. 700 °C erreicht, ergibt. Die Eckbereiche können zu diesem Zeitpunkt noch vergleichsweise geringere Temperaturen aufweisen.

Die anschließende Resterwärmung und Homogenisierung (vollständige Austenitisierung und Durcherwärmung) im Strahlungsofen führt zu einem ausnehmend homogenen Ergebnis hinsichtlich der Wärmeverteilung (Figur 9). Die gesamte Stahlblechplatine, Patch und umliegende Bereiche, weist ein einheitliches Temperaturniveau auf.

Das erfindungsgemäße Verfahren ermöglicht also auch bei Vorliegen großer Blechdickensprünge (≥ 0,5 mm) ein homogenes Erwärmen von Stahlblechplatinen oder Stahlblechbauteilen. Dadurch ergeben sich vergrößerte Prozessfenster.

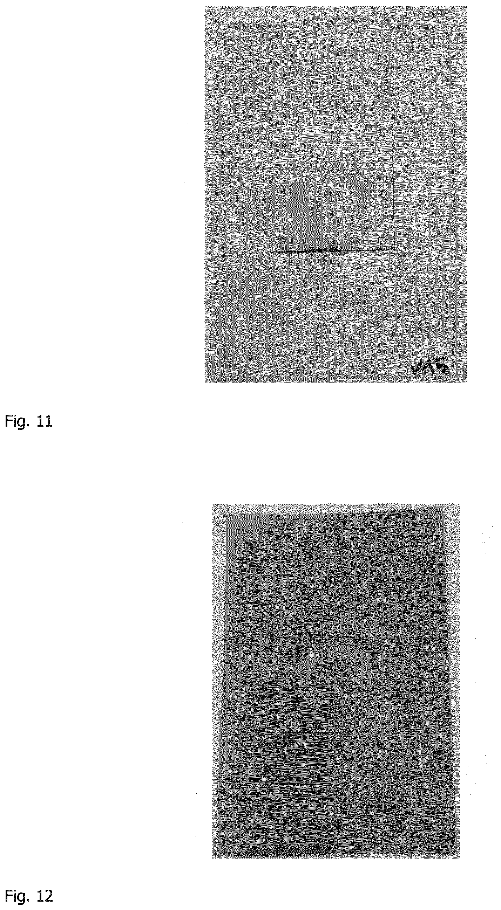

Die Figuren 10 bis 12 zeigen beschichtete Stahlblechplatinen nach Erwärmung mittels des erfindungsgemäßen Verfahrens. Bei den Beschichtungen auf Basis von Zink, ZF80 (Figur 10) und Z80 (Figur 11), ist kein Ausblühen und keine Silbrigkeit zu beobachten. Die Beschichtung auf Basis von Aluminium (Figur 12) weist nach der Homogenisierung in der optischen Betrachtung keine Anzeichen von Schichtverschiebungen auf. Dies beweist die erfolgreiche Anwendung des erfindungsgemäßen Verfahrens bei beschichteten Stahlblechplatinen.

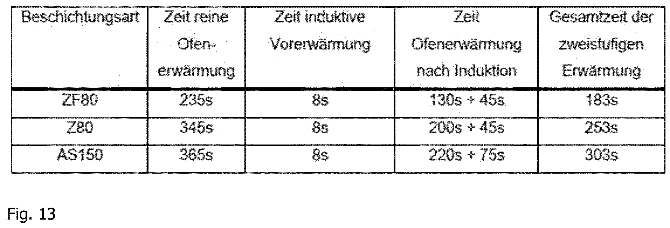

In Figur 13 ist eine Übersicht über die Zeitersparnis bezüglich der Ofenverweilzeit für Stahlblechplatinen mit unterschiedlichen Beschichtungen zu sehen. Es wird offensichtlich, dass die Gesamtzeit der zweistufigen Erwärmung deutlich kürzer ausfällt als die Zeit, welche für die reine Ofenerwärmung benötigt würde. Zudem ist die eigentliche Netto-Ofenverweilzeit nach der induktiven Vorerwärmung und dem Transfer in den Strahlungsofen signifikant verkürzt.

Da nicht mehr die gesamte Erwärmung in einem im Vergleich zu induktiver Erwärmung weniger energieeffizienten Strahlungsofen erfolgt und die Erwärmung insgesamt schneller ausführbar ist, kann durch das erfindungsgemäße Verfahren der Energiebedarf für die Austenitisierung von Stahlblechplatinen und Stahlblechbauteilen deutlich reduziert werden.

Die verkürzte Netto-Ofenverweilzeit ermöglicht wiederum die Verwendung von kürzeren Öfen bei gleichen Taktzeiten.

Die Erfindung ermöglicht es somit die Vorteile der induktiven Erwärmung für das Erwärmen von beschichteten Stahlblechplatinen und Stahlblechbauteilen, insbesondere gepatchter Stahlblechplatinen und Stahlblechbauteilen, Tailor Welded Blanks und Tailor Rolled Blanks, optimal nutzbar zu machen, wobei eine Inhomogenität der Erwärmung, eine Aluminium-Silizium-Schichtverschiebung und ein Ausblühen von Zink-Schichten vermieden wird.

## Patentansprüche

1. Verfahren zum Erwärmen von Stahlblechbauteilen zum Zwecke des Formhärtens oder Stahlblechplatinen zum Zwecke des Presshärtens, wobei die Stahlblechplatine oder das Stahlblechbauteil zunächst induktiv teil- oder vollflächig erwärmt wird, wobei ein Flächeninduktor verwendet wird, welcher auf einer Seite der Stahlblechplatine oder des Stahlblechbauteils einwirkt, wobei während der induktiven Erwärmung die Stahlblechplatine oder das Stahlblechbauteil und/oder der Flächeninduktor zur Erzeugung einer Relativbewegung zwischen der Stahlblechplatine oder dem Stahlblechbauteil und dem Flächeninduktor bewegt werden, wobei die induktive Erwärmung mittels einer, mehrerer oder aller der nachfolgenden Maßnahmen gesteuert wird:
a. Relativbewegung zwischen dem Flächeninduktor und dem Stahlblechbauteil oder der Stahlblechplatine um mindestens eine halbe Induktorwindung;
b. Geschwindigkeit der Bewegung des Flächeninduktors;
c. Geschwindigkeit der Bewegung der Stahlblechplatine oder des Stahlblechbauteils;
d. Verfahrweg des Flächeninduktors;
e. Verfahrweg der Stahlblechplatine oder des Stahlblechbauteils;
f. Abstand zwischen dem Flächeninduktor und der Stahlblechplatine oder dem Stahlblechbauteil;
g. Form des Flächeninduktors;
h. Leistung des Flächeninduktors;
i. Frequenz des Flächeninduktors;
j. An- und Ausschalten des Flächeninduktors
und wobei die Stahlblechplatine oder das Stahlblechbauteil anschließend zum Zwecke der Homogenisierung und Resterwärmung in einen Strahlungsofen verbracht wird.

2. Verfahren nach Anspruch 1, **dadurch gekennzeichnet, dass** die Stahlblechplatinen oder Stahlblechbauteile eine Beschichtung auf Basis von Zink oder auf Basis von Aluminium aufweisen.

3. Verfahren nach einem der vorhergehenden Ansprüche, **dadurch gekennzeichnet, dass** die Stahlblechplatinen oder Stahlblechbauteile Bereiche unterschiedlicher Dicke aufweisen.

4. Verfahren nach einem der vorhergehenden Ansprüche, **dadurch gekennzeichnet, dass** die Stahlblechplatinen oder Stahlblechbauteile gepatchte Stahlblechplatinen oder gepatchte Stahlblechbauteile oder Tailor Welded Blanks oder Stahlblechbauteile aus Tailor Welded Blanks oder Tailor Rolled Blanks oder Stahlblechbauteile aus Tailor Rolled Blanks sind.

5. Verfahren nach einem der vorhergehenden Ansprüche, **dadurch gekennzeichnet, dass** die Stahlblechplatine oder das Stahlblechbauteil während der induktiven Erwärmung auf einer Transferschiene ruht, wobei diese so ausgebildet ist, dass die Stahlblechplatine oder das Stahlblechbauteil gespannt wird.

6. Verfahren nach einem der Ansprüche 1 bis 4, **dadurch gekennzeichnet, dass** die Stahlblechplatine oder das Stahlblechbauteil während der induktiven Erwärmung auf einem Robotergreifer angeordnet ist, wobei dieser so ausgebildet ist, dass die Stahlblechplatine oder das Stahlblechbauteil gespannt wird.

7. Verfahren nach einem der vorhergehenden Ansprüche, **dadurch gekennzeichnet, dass** bei der induktiven Erwärmung der gesamte Bereich oder nur bestimmte Bereiche der Stahlblechplatinen oder Stahlblechbauteile auf 400 bis 800 °C, insbesondere 500 bis 750 °C, erwärmt werden.

8. Verfahren nach einem der vorhergehenden Ansprüche, **dadurch gekennzeichnet, dass** die induktive Erwärmung nur in Bereichen größerer Dicke der Stahlblechplatine oder des Stahlblechbauteils, das heißt im Bereich des zumindest einen Patches oder des zumindest einen dickeren Bereichs eines Tailor Welded Blank oder des zumindest einen dickeren Bereichs eines Tailor Rolled Blank durchgeführt wird.

9. Verfahren nach einem der vorhergehenden Ansprüchen, **dadurch gekennzeichnet, dass** der Abstand zwischen dem Flächeninduktor und der Stahlblechplatine oder dem Stahlblechbauteil entlang des Verfahrwegs des Flächeninduktors und/oder des Verfahrwegs der Stahlblechplatine oder des Stahlblechbauteils mindestens einmal verändert wird.

10. Verfahren nach einem der vorhergehenden Ansprüche, **dadurch gekennzeichnet, dass** die induktive Erwärmung der Stahlblechplatinen oder Stahlblechbauteile innerhalb von < 20 s, insbesondere < 10 s durchgeführt wird.

11. Verfahren nach einem der vorhergehenden Ansprüche, **dadurch gekennzeichnet, dass** ein Transfer der induktiv vorerwärmten Stahlblechplatinen oder Stahlblechbauteile in den Strahlungsofen innerhalb von maximal 10 s, insbesondere maximal 5 s durchgeführt wird.

12. Verfahren nach einem der vorhergehenden Ansprüche, **dadurch gekennzeichnet, dass** durch die induktive Erwärmung mindestens 80% Flächenanteil des induktiv erwärmten Bereichs auf eine Temperatur, gemessen von der Seite des Flächeninduktors, mit einem maximalen Temperaturdelta von ± 50 K gebracht wird.

13. Verfahren nach einem der vorhergehenden Ansprüche, **dadurch gekennzeichnet, dass** die Erwärmung der Bereiche größerer Dicke so erfolgt, dass nach der induktiven Erwärmung die gesamte Stahlblechplatine oder das gesamte Stahlblechbauteil im Strahlungsofen auf eine einheitliche Temperatur mit einem maximalen Temperaturdelta von ±25 K gebracht wird.

14. Verfahren nach einem der vorhergehenden Ansprüche, **dadurch gekennzeichnet, dass** im Strahlungsofen die Resterwärmung der induktiv vorerwärmten Stahlblechplatinen oder Stahlblechbauteile auf Ac3, insbesondere > 850 °C, insbesondere > 870 °C erfolgt und diese Temperatur zur vollständigen Austenitisierung und Durcherwärmung, mindestens > 15 s, insbesondere > 30s, insbesondere 45 s gehalten wird.

15. Vorrichtung zum Erwärmen von Stahlblechbauteilen zum Zwecke des Formhärtens oder Stahlblechplatinen zum Zwecke des Presshärtens, insbesondere Vorrichtung zur Durchführung des Verfahrens nach den Ansprüchen 1 bis 14, **dadurch gekennzeichnet, dass** die Vorrichtung einen Robotergreifer und/oder eine Transferschiene, einen einseitigen Flächeninduktor und einen Strahlungsofen umfasst, wobei der Robotergreifer, der Flächeninduktor und die Transferschiene entlang eines vorgegebenen Verfahrwegs mit einer vorgegebenen Geschwindigkeit bewegbar sind, sodass während einer induktiven Erwärmung eine Relativbewegung um mindestens eine halbe Induktorwindung zwischen der Stahlblechplatine oder dem Stahlblechbauteil und dem Flächeninduktor ausführbar ist.

16. Vorrichtung nach Anspruch 15, **dadurch gekennzeichnet, dass** die Transferschiene so ausgebildet ist, dass die Stahlblechplatine oder das Stahlblechbauteil während der induktiven Erwärmung gespannt werden kann.

17. Vorrichtung nach Anspruch 15, **dadurch gekennzeichnet, dass** der Robotergreifer so ausgebildet ist, dass die Stahlblechplatine oder das Stahlblechbauteil während der induktiven Erwärmung gespannt werden kann.
